Europäisches Patentamt

European Patent Office

Office européen des brevets

(11) Veröffentlichungsnummer : **0 178 468**
B1

(12) # EUROPÄISCHE PATENTSCHRIFT

(45) Veröffentlichungstag der Patentschrift :
03.01.90

(51) Int. Cl.⁵ : **G 01 M 17/00**

(21) Anmeldenummer : 85111641.8

(22) Anmeldetag : 14.09.85

(54) Verfahren zum Bestimmen reparaturbedürftiger Bauteile einer Fahrzeugeinheit.

(30) Priorität : 13.10.84 DE 3437661

(43) Veröffentlichungstag der Anmeldung :
23.04.86 Patentblatt 86/17

(45) Bekanntmachung des Hinweises auf die Patenterteilung : 03.01.90 Patentblatt 90/01

(84) Benannte Vertragsstaaten :
AT BE CH FR GB IT LI LU NL SE

(56) Entgegenhaltungen :
WO-A-86/011 67
TECHNISCHES MESSEN A.T.M., Band 45, Nr. 3, März
1978, Seiten 101-103, München, DE; H. HARTWIG et
al.: "Akustische Messverfahren in der Automobilentwicklung"
PATENTS ABSTRACTS OF JAPAN, Band 6, Nr. 212 (P-
151)(1090), 26. Oktober 1982; & JP-A-57 118 139

(73) Patentinhaber : Fried. Krupp Gesellschaft mit beschränkter Haftung
Altendorfer Strasse 103
D-4300 Essen 1 (DE)

(72) Erfinder : Sinambari, Gholam-Reza, Dr.-Ing.
Bodensfeld 35
D-5620 Velbert 11 (DE)

EP 0 178 468 B1

**Beschreibung**

Die Erfindung betrifft Verfahren nach der Ansprüchen 1, 2. Der Begriff der Fahrzeugeinheit erstreckt sich dabei vom zweirädrigen Straßenfahrzeug bis zu einem aus mehreren Schienenfahrzeugen zusammengestellten Zug. Zu den zur Fortbewegung der Fahrzeugeinheit notwendigen Bauteilen zählen Räder bzw. Radsätze, Lager, Kardanwellen, Übertragungselemente, Halterungen usw.

Fahrzeuge werden im allgemeinen in bestimmten Zeit- oder Entfernungsintervallen in Werkstätten auf ihre Betriebstauglichkeit hin untersucht und gewartet. Während dieser Zeit stehen sie für den Betriebseinsatz nicht zur Verfügung. Bei der Wartung werden oft Bauteile vorsorglich auch dann ausgetauscht, wenn sie noch funktionstüchtig sind. Besteht die Fahrzeugeinheit aus verschiedenartigen Fahrzeugen — z. B. Lokomotive und Wagen — so muß die Fahrzeugeinheit auseinandergenommen und die Fahrzeuge getrennt in Werkstätten gebracht werden.

Der Erfindung liegt die Aufgabe zugrunde, Verfahren anzugeben, mit dem die Reparaturbedürftigkeit von zur Fortbewegung der Fahrzeugeinheit notwendigen Bauteilen bestimmt werden kann, ohne die Fahrzeugeinheit aus dem Betrieb nehmen zu müssen.

Durch das Messen der bei der Bewegung der Fahrzeugeinheit auftretenden Schwingungen im Neuzustand der Fahrzeugeinheit und zu einem späteren Zeitpunkt können die sich dabei ergebenden Unterschiede als Kriterium für die Beschaffenheit der Bauteile genutzt und für ihre Reparaturbedürftigkeit herangezogen werden.

Die Fahrzeugeinheit wird dabei für die Messungen mit gleicher und mit gleichbleibender Geschwindigkeit über die in einer waagerechten Ebene angeordnete geradlinige Wegstrecke bewegt.

Die Schwingungen werden beispielsweise mit Intensitätssonden gemessen. Bei der Verwendung von Intensitätssonden werden lediglich die in deren Achse gerichteten Komponenten der Schallintensität (abgestrahlte flächenbezogene Schalleistung) der Bauteile erfaßt, wodurch eine eindeutige Lokalisierung der Schwingungs- bzw. Geräuschursache möglich ist.

Da das Verfahren ohne Zeiteinbuße auch im Zusammenhang mit dem planmäßigen Betrieb durchgeführt werden kann, können die Intervalle zum Bestimmen der reparaturbedürftigen Bauteile kürzer gewählt und die Sicherheit der Fahrzeugeinheit damit erhöht werden.

Das Aufnehmen der Schwingungen durch unmittelbar an den Bauteilen angeordnete Schwingungsaufnehmer bringt den Vorteil mit sich, daß das Bestimmen der Reparaturbedürftigkeit der Bauteile an Bord der Fahrzeugeinheit vorgenommen werden kann, und zwar jedesmal, wenn die Fahrzeugeinheit auf einer waagerechten geradlinigen Strecke mit der gleichen konstanten Geschwindigkeit bewegt wird.

Der Gegenstand der Erfindung wird im folgenden anhand von in der Zeichnung dargestellten Ausführungsbeispielen näher erläutert. Es zeigen:

Fig. 1 eine als Zug ausgebildete Fahrzeugeinheit,

Fig. 2 die Fahrzeugeinheit in einem schematisierten Querschnitt und die zum Durchführen des Verfahrens vorgesehenen Geräte in einer schematischen Darstellung,

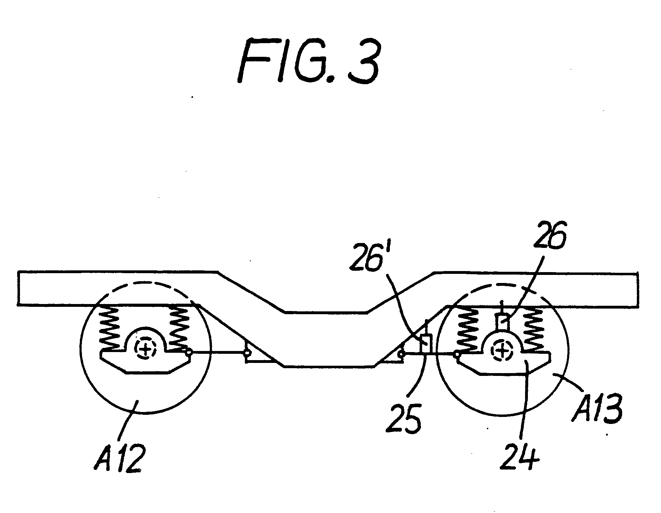

Fig. 3 die Anordnung von Schwingungsaufnehmern an einem Radsatz zugeordneten Bauteilen und

Fig. 4 den Terzpegel der Schallintensität der fahrenden Fahrzeugeinheit.

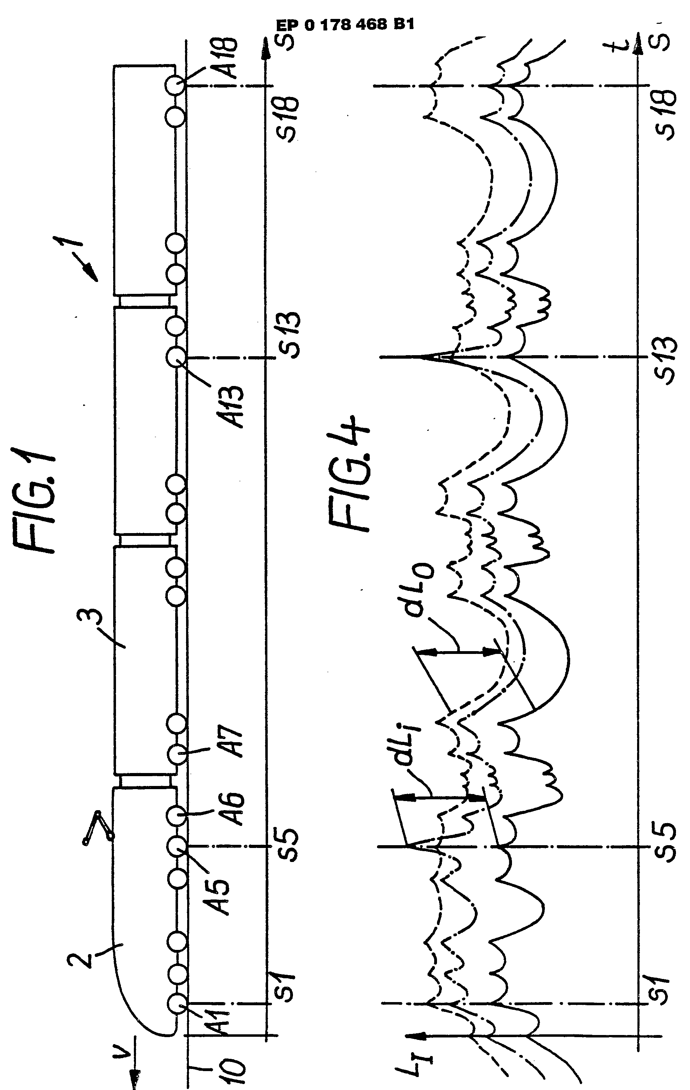

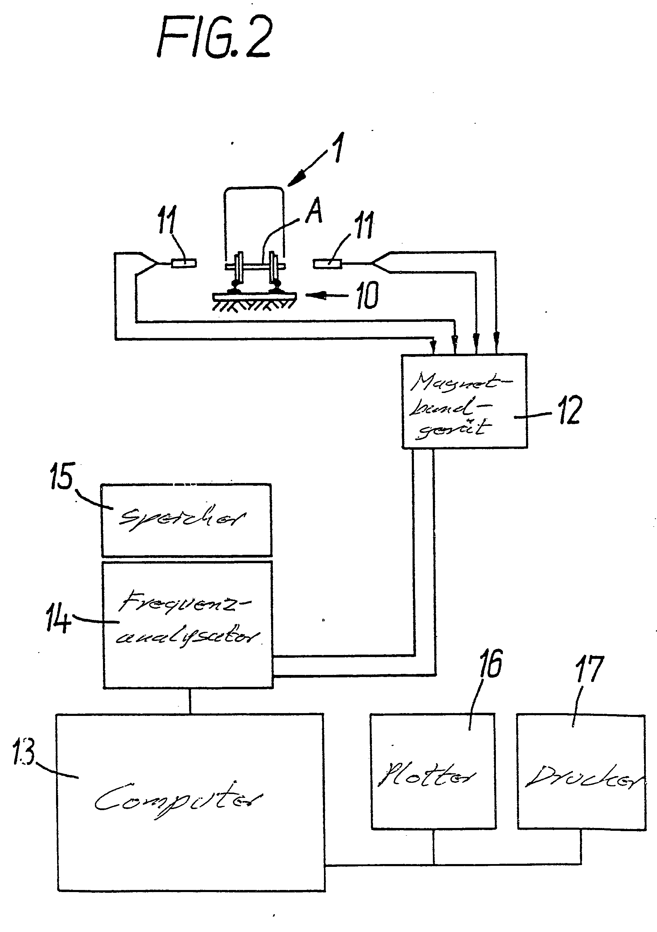

Bei dem Ausführungsbeispiel gemäß Fig. 1 ist die Fahrzeugeinheit als schienengebundener Zug 1 mit einer sechsachsigen Lok 2 und mit drei vierachsigen Wagen 3 ausgebildet, so daß der Zug insgesamt 18 Achsen A1 ... A6, A7 ... A18 aufweist. Der Zug 1, der in Fig. 2 in einem schematischen Querschnitt dargestellt ist, wird mit konstanter Geschwindigkeit v über eine waagerechte gerade Norm- oder Teststrecke 10 bewegt.

Links und rechts der Teststrecke 10 ist je eine Intensitätssonde 11 aufgestellt, die die senkrecht zur Teststrecke 10 gerichteten Komponenten der vom Zug 1 bzw. von dessen Bauteilen verursachten Schallintensitäten aufnimmt und entsprechende elektrische Signale an ein Magnetbandgerät 12 abgibt, wo sie auf einem Magnetband gespeichert werden.

Die gespeicherten Signale beinhalten den Verlauf der Schallintensität aller Frequenzen in Abhängigkeit von der Zeit t. Da der Zug 1 mit konstanter Geschwindigkeit v bewegt wird, ist durch Multiplikation der Zeit t mit der Geschwindigkeit v auch eine Aussage über die Schallintensität in Abhängigkeit von dem zurückgelegten Weg bzw. in Abhängigkeit von einer auf die Spitze des Zuges 1 bezogenen Weg-Abszisse s gegeben, wobei der Abstand der Achsen A1 ... A18 von der Spitze des Zuges 1 mit s1 ... s18 bezeichnet ist.

In einem über eine Triggerschaltung von einem Computer 13 gesteuerten Frequenzanalysator 14 werden aus den durch das Magnetbandgerät 12 gespeicherten Schallintensitäten verschiedene Frequenzbänder ermittelt und in einer Speichereinheit 15 gespeichert. Die Bandbreite und die Mittenfrequenz der Frequenzbänder sind dabei auf die verschiedenen Bauteile, z. B. die Achsen A1 ... A6, A7 ... A18, abgestimmt.

In Fig. 4 ist beispielhaft der Terzpegel der Schallintensität $L_I$ des Zuges 1 über der Zeit t bzw. über dem Weg s mit ausgezogenen Linien aufgetragen, wobei u. a. eine der Zahl der Achsen A1 ... A18 des Zuges 1 entsprechende Zahl von Intensitätsspitzen vorhanden ist. Solche Diagramme können z. B. von einem an den Computer 13 angeschlossenen Plotter 16 aufgezeichnet werden. Zusätzlich oder anstelle der grafischen Aufzeichnungen können auch Protokolle mit den frequenz- und zeit- bzw. wegabhängigen Intensitäten von einem an den Computer 13 angeschlossenen Drucker 17 erstellt werden. Hierbei kann der Ort der Schwingungsentstehung bzw. Schwingunsursache durch den Abstand s von der Spitze des Zuges 1 unmittelbar in Metern angegeben werden.

Die infolge einer auf die erste Messung im Neuzustand des Zuges 1 folgenden Messung gewonnenen Intensitätsfrequenzbänder werden dem Computer 13 zusammen mit den entsprechenden in der Speichereinheit 15 gespeicherten Intensitätsfrequenzbändern zur Ermittlung der Differenz zugeführt. Eine einen vorgebbaren Betrag $dL_O$ überschreitende Differenz $dL_i$ des Intensitätspegels $L_i$ ist dabei ein Kriterium für die Reparaturbedürftigkeit eines Bauteils. Bei dem Diagramm in Fig. 4 ist die durch den gegebenenfalls bauteil- und damit ortsabhängigen vorgebbaren Betrag $dL_O$ gegebene zulässige Überschreitung des bei der ersten Messung gewonnenen Intensitätsverlaufs gestrichelt und der bei der später erfolgten Messung gewonnene Intensitätsverlauf strichpunktiert dargestellt ist. Aus Fig. 4 ergibt sich, daß die fünfte Achse A5 der Lok 2 und die dritte Achse A13 des zweiten Wagens 3 reparaturbedürftig sind.

In einem weiteren Ausführungsbeispiel sind Schwingungsaufnehmer unmittelbar an den einzelnen Bauteilen der Fahrzeugeinheit angeordnet. So sind beispielsweise das Lagergehäuse 24 der Achse A13 und der zugehörige Achslenker 25 jeweils mit einem Beschleunigungsaufnehmer 26, 26' versehen. Die Auswertung der von den Beschleunigungsaufnehmern abgegebenen analogen Signale entspricht dabei dem bereits beschriebenen Verfahren mit dem Unterschied, daß die Intensitätswerte den Bauteilen unmittelbar zugeordnet sind und sich eine Lokalisierung der Schwingungsursache, d. h. die Bestimmung des Bauteils erübrigt. Die zur Auswertung erforderliche hardware ist im Zug 1 angeordnet.

## Patentansprüche

1. Verfahren zum Bestimmen reparaturbedürftiger Bauteile, die zur Fortbewegung einer Fahrzeugeinheit (1) erforderlich sind, mit folgenden Schritten :

a) Bewegen der Fahrzeugeinheit (1) im Neuzustand über eine in einer waagerechten Ebene angeordnete geradlinige Wegstrecke (10) bei konstanter Geschwindigkeit

b) Aufnehmen von an den Bauteilen auftretenden Schwingungen während des Bewegens der Fahrzeugeinheit (1) unmittelbar über die durch die Bauteile erzeugten Luftschwingungen durch fest an der Wegstrecke (10) angeordnete Intensitätssonden (11),

c) Erstellen von Frequenzspektren der aufgenommenen Schwingungen,

d) erneutes Bewegen der Fahrzeugeinheit (1) über die gleiche Wegstrecke (10) bei konstanter Geschwindigkeit zu einem späteren Zeitpunkt,

e) Aufnehmen von an den Bauteilen auftretenden Schwingungen während des erneuten Bewegens der Fahrzeugeinheit (1) durch die Intensitätssonden (11),

f) Erstellen von entsprechenden Frequenzspektren der aufgenommenen Schwingungen und

g) Gegenüberstellen der Frequenzspektren.

2. Verfahren zum Bestimmen reparaturbedürftiger Bauteile, die zur Fortbewegung einer Fahrzeugeinheit (1) erforderlich sind, mit folgenden Schritten :

a) Bewegen der Fahrzeugeinheit (1) im Neuzustand über eine in einer waagerechten Ebene angeordnete geradlinige Wegstrecke (10) bei konstanter Geschwindigkeit

b) Aufnehmen von an den Bauteilen auftretenden Schwingungen während des Bewegens der Fahrzeugeinheit (1) durch unmittelbar an den Bauteilen angeordnete Schwingungsaufnehmer (26, 26'),

c) Erstellen von Frequenzspektren der aufgenommenen Schwingungen,

d) erneutes Bewegen der Fahrzeugeinheit (1) über die gleiche Wegstrecke (10) bei konstanter Geschwindigkeit zu einem späteren Zeitpunkt,

e) Aufnehmen von an der Bauteilen auftretenden Schwingungen während des erneuten Bewegens der Fahrzeugeinheit (1) durch die Schwingungsaufnehmer (26, 26'),

f) Erstellen von entsprechenden Frequenzspektren der aufgenommenen Schwingungen und

g) Gegenüberstellen der Frequenzspektren.

## Claims

1. A process for determining the need for repair of constructional members required for the movement of a transport unit (1), having the following steps :

a) moving the transport unit (1) in the new condition at constant speed over a rectilinear distance (10) disposed in a horizontal plane,

b) recording by intensity probes (11) rigidly disposed over the distance (10) directly, via the air vibrations produced by the structural members, vibrations occurring thereon during the movement of the transport unit,

c) drawing up frequency spectra of the vibrations recorded,

d) moving the transport unit (1) at constant speed over the same distance (10) again at a later time,

e) recording by the intensity probes (11) vibrations occurring on the structural members during this further movement of the transport unit (1),

f) drawing up corresponding frequency spectra of the vibrations recorded, and

g) comparing the frequency spectra.

2. A process for determining the need for repair of constructional members required for the movement of a transport unit (1), having the following steps :

a) moving the transport unit (1) in the new condition at constant speed over a rectilinear distance (10) disposed in a horizontal plane,

b) recording by vibration recorders (26, 26') disposed directly on the structural members vibrations occurring thereon during the movement of the transport unit (1),

c) drawing up frequency spectra of the vibrations recorded,

d) moving the transport unit (1) at constant speed over the same distance (10) again at a later time,

e) recording by the vibration recorders (26, 26') vibrations occurring on the structural members during this further movement of the transport unit (1),

f) drawing up corresponding frequency spectra of the vibrations recorded, and

g) comparing the frequency spectra.

**Revendications**

1. Procédé pour déterminer la nécessité de réparation de pièces pour qu'une unité de transport (1) constituée par des véhicules puisse continuer à circuler, ce procédé comportant les opérations suivantes :

a) Faire circuler l'unité de transport (1) à l'état neuf et à une vitesse constante sur un trajet (10) rectiligne situé dans un plan horizontal.

b) Capter, au moyen de sondes d'intensité (11) montées à poste fixe sur le trajet (10), directement par l'intermédiaire des vibrations de l'air produites par les pièces, les vibrations qui se produisent dans les pièces pendant le déplacement de l'unité de transport.

c) Etablir les spectres de fréquence des vibrations captées.

d) Faire circuler à nouveau l'unité de transport (1) plus tard, à vitesse constante sur le même trajet (10).

e) Capter, au moyen de sondes d'intensité (11), les vibrations qui se produisent dans les pièces pendant ce nouveau déplacement de l'unité de transport (10).

f) Etablir les spectres de fréquence correspondantes des vibrations captées.

g) Comparer les spectres de fréquence.

2. Procédé de détermination des pièces qui ont besoin d'être réparées pour qu'une unité de transport (1) constituée par des véhicules puisse continuer à circuler, ce procédé comportant les opérations suivantes :

a) faire circuler l'unité de transport (1) à l'état neuf à vitesse constante sur un trajet (10) rectiligne situé dans un plan horizontal.

b) Capter au moyen de capteurs de vibration (26, 26') montés directement sur les pièces, les vibrations qui se produisent dans les pièces pendant le déplacement de l'unité de transport (1).

c) Etablir les spectres de fréquence des vibrations captées.

d) Faire circuler à nouveau l'unité de transport (1), plus tard, à vitesse constante sur le même trajet (10).

e) Capter, au moyen des capteurs de vibrations (26, 26'), les vibrations qui se produisent dans les pièces pendant ce nouveau déplacement de l'unité de transport (1).

f) Etablir les spectres de fréquence correspondants des vibrations captées.

g) Comparer les spectres de fréquence.

# FIG.1

# FIG.4

EP 0 178 468 B1

# FIG.2

# FIG. 3